# EUROPEAN PATENT SPECIFICATION

(11) **EP 3 365 617 B1**
(45) Date of publication and mention of the grant of the patent: **14.08.2019**
(21) Application number: 16857879.7
(22) Date of filing: 11.10.2016
(51) Int. Cl.: F25B 43/04, B01D 3/06, B01D 3/10, B01D 19/00, F24D 19/08, F25J 3/06, C02F 1/20, B01D 61/00

(54) **METHOD FOR DEGASSING LIQUID MIXTURES WITH LOW BOILING POINTS IN CLOSED SYSTEMS**
VERFAHREN ZUR ENTGASUNG FLÜSSIGER MISCHUNGEN MIT NIEDRIGEN SIEDEPUNKTEN IN GESCHLOSSENEN SYSTEMEN
PROCÉDÉ DE DÉGAZAGE DE MÉLANGES LIQUIDES À FAIBLES POINTS D'ÉBULLITION DANS DES SYSTÈMES FERMÉS

(30) Priority: 22.10.2015 SE 1551369
(43) Date of publication of application: 29.08.2018
(73) Proprietor: QTF Sweden AB, 393 53 Kalmar (SE)
(72) Inventor: CARLSSON, Björn, 392 43 Kalmar (SE)
(74) Representative: Noréns Patentbyrå AB
(86) International application number: PCT/SE2016/050979
(87) International publication number: WO 2017/069677

(56) References cited:
- EP-A2- 0 038 958
- EP-A2- 1 887 196
- WO-A1-2015/026228
- WO-A2-2012/052226
- US-A- 3 620 038
- US-A1- 2003 111 429
- US-A1- 2004 231 351

## Description

The present invention relates to a method for degassing liquid mixtures with low boiling points in closed systems.

To increasing numbers of energy wells, such as for geothermal heating and energy stores as well as indirectly cooled technical systems such as freezer stores, ice rinks etc., compounds are added having a low boiling point, with the purpose of preventing freezing in the pipes. Examples of such additives are ammonium hydroxide, where the ammonia in 12.5% ammonium hydroxide has a boiling point of 39°C, and ethylic alcohol which has a boiling point of 78.5°C, both at atmospheric pressure.

It is common that plastic piping are used for transporting the liquid in the systems. Plastic pipes are not diffusion tight, but gases such as oxygen, nitrogen and carbon dioxide, and also other gases, can diffuse in from the environment to the liquid in the systems.

Also when using metal pipes, leakage in occurs via joints in the system.

Gas can also leak in from a gas-filled equipment connected to the liquid systems. Such equipment may be cooling machines.

A major problem with heating- and cooling systems comprising a heat carrying liquid is corrosion inside the systems. Moreover, compounds, primarily oxygen, nitrogen, carbon dioxide, result in that the energy efficiency deteriorates by these compounds aggregating in pumps, which deteriorates the efficiency of such pumps. Apart from oxygen, nitrogen and carbon dioxide, there may be other compounds that it is desired to remove, such as hydrogen sulphide or sulphur dioxide or gaseous cooling media.

In such systems, there are different types of corrosion, such as general corrosion, galvanic corrosion, erosion corrosion, crevice corrosion, microbiologically induced corrosion and local group corrosion.

The water quality is of great importance for the corrosion process. Primarily, the corrosion depends, inter alia, upon the amount of dissolved compounds, gases dissolved in the liquid, the pH value, the temperature, etc. One parameter which is very important is the concentration of dissolved oxygen in the liquid, since oxygen is necessary for an oxidation process.

For closed water systems, which today are the most common ones, gases precipitating from the liquid, such as air, will occur as bubbles at high points in the system.

The ability of water to dissolve air depends upon temperature, pressure and salinity. Water dissolves more gas at higher pressures and lower temperatures.

The consumed oxygen during oxidation within the system is replaced by oxygen from the environment leaking into the system so as to achieve equilibrium with respect to oxygen in the system.

Therefore, systems need to be degassed in order to lower the oxygen rates in the system.

Moreover, nitrogen and carbon dioxide need to be removed from the systems, because of the negative effects of these compounds on heat exchangers and pumps.

In order to remove harmful gases, such as oxygen, nitrogen and carbon dioxide, the liquid mixture can be subjected to an underpressure, whereupon the gases are removed. Such a lowering of the boiling point, however, results in that the additives for a lowering of the freezing point are driven out from the liquid mixture before the said harmful compounds. Document WO 2015/026228 discloses such a degassing method.

The present invention solves this problem.

Hence, the present invention relates to a method for degassing certain compounds in liquid mixtures with low boiling point in closed liquid systems, wherein a part of the liquid is isolated for degassing and wherein degassed liquid is restored to the closed system, and is characterised in that a part of the liquid mixture is diverted from the closed system, in that a vacuum control valve is caused to lower the pressure of the diverted liquid to a predetermined underpressure, in that the liquid with the lowered pressure is brought to a degassing tank in which degassing of the liquid is caused to take place, in that the pressure in the degassing tank is caused to be sufficiently low for certain compounds to leave the liquid in gas phase, in that a second pump after the degassing tank is caused to increase the pressure of a smaller part of the diverted liquid part and the gas to a sufficient pressure for certain compounds to dissolve in the liquid while other compounds remain in gas phase, in that the second pump is caused to pump the liquid and the gas from the degassing tank to a deairing tank comprising a deairing valve to the environment, through which valve separated gases flow out to the environment, and in that the liquid in the deairing tank is cased to flow back to the closed system, and in that a remaining part of the liquid in the degassing tank, using a first pump, is caused to be pumped directly from the degassing tank back to the closed system.

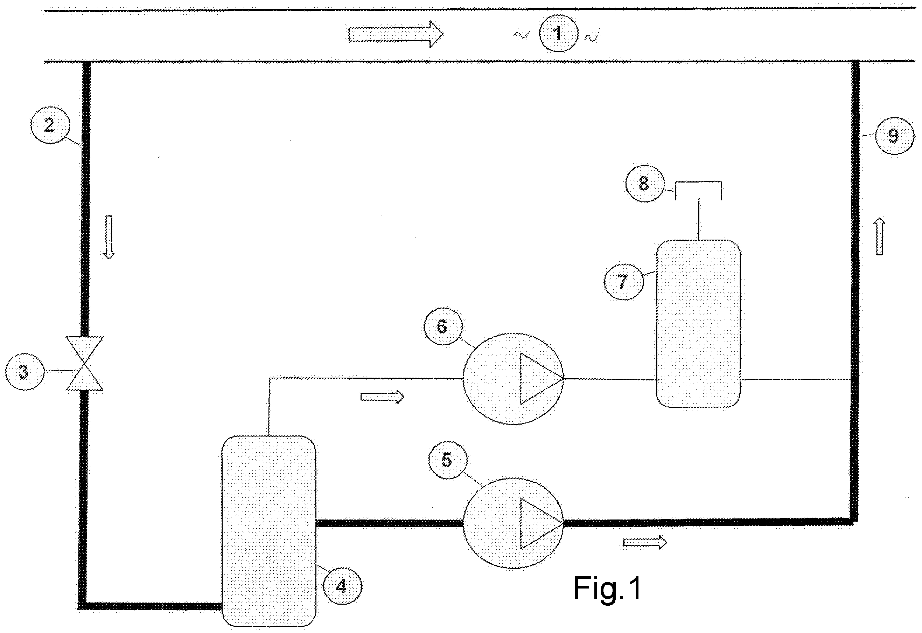

Below, the invention is described in closer detail, partly in connection to an exemplifying embodiment shown in the drawings, wherein Figure 1 illustrates a flow schema of a degassing device mounted on a conduit of the liquid system in question.
Figure 2 illustrates a flow schema according to Figure 1, in which a membrane unit is present at the entry side of the degassing device.
Figure 3 illustrates a flow schema according to Figure 1, in which a membrane unit is present at the exit side of the degassing device.

In Figure 1, a method is illustrated for degassing certain compounds in liquid mixtures with low boiling points in closed systems. The systems may be arranged for cooling. The conduit 1 belongs to a liquid system for cooling.

A part of the liquid is separated from the system 1 using a conduit 1 for degassing, and wherein degassed liquid is restored to the closed system using a conduit 9.

According to the invention, a part of the liquid mixture is diverted from the closed system, whereby a vacuum control valve 3 is caused to lower the pressure of the diverted liquid to a predetermined underpressure. The flow direction of the liquid is shown by the arrow at the conduit 2. The liquid with the decreased pressure is brought to a degassing tank 4, in which degassing of the liquid is caused to take place. The pressure in the degassing tank is caused to be sufficiently low for certain compounds to leave the liquid in gas phase. Oxygen, nitrogen and carbon dioxide depart at lower pressures than a pressure at which ammonium hydroxide and ethylene alcohol depart. Hence, at a predetermined pressure there is a liquid in which oxygen, nitrogen and carbon dioxide are dissolved at the same time as ammonium hydroxide and ethylene alcohol remain in gas phase. The pressure of the main part of the isolated liquid is raised using a first pump 5 which reinstitutes this part of the liquid to the system via a conduit 9.

After the degassing tank 4, a second pump 6 is caused to increase the pressure of a smaller part of the liquid diverted from the conduit 3 and the gas in the degassing tank 4 to a sufficiently high pressure in order for certain compounds to condense and thereby dissolve in the liquid, while other compounds remain in gas phase.

The second pump 6 is caused to pump liquid and gas to a deairing tank 7 comprising a float deairing valve 8, through which separated gases flow to the environment. The float deairing valve is of suitable known type.

The liquid in the deairing tank 7 is caused to flow back to the closed system using the second pump 6.

Of course, the said underpressure and the pressure in the deairing tank 7 depend upon which gases that are to go into gas phase and thereby be separated out, and which gases are desired for retaining in the liquid mixture. The skilled person has no difficulties to select suitable pressures.

It is apparent that the invention solves the initially stated problem.

Regarding the above defined compounds, it is preferred that the underpressure in the degassing tank 4 is caused to be between 0.05 bars and 0.4 bars at a system pressure of 0.5 to 6 bars.

Moreover, it is preferred that the pressure increase in the deairing tank 7 is caused to be at least the prevailing system pressure.

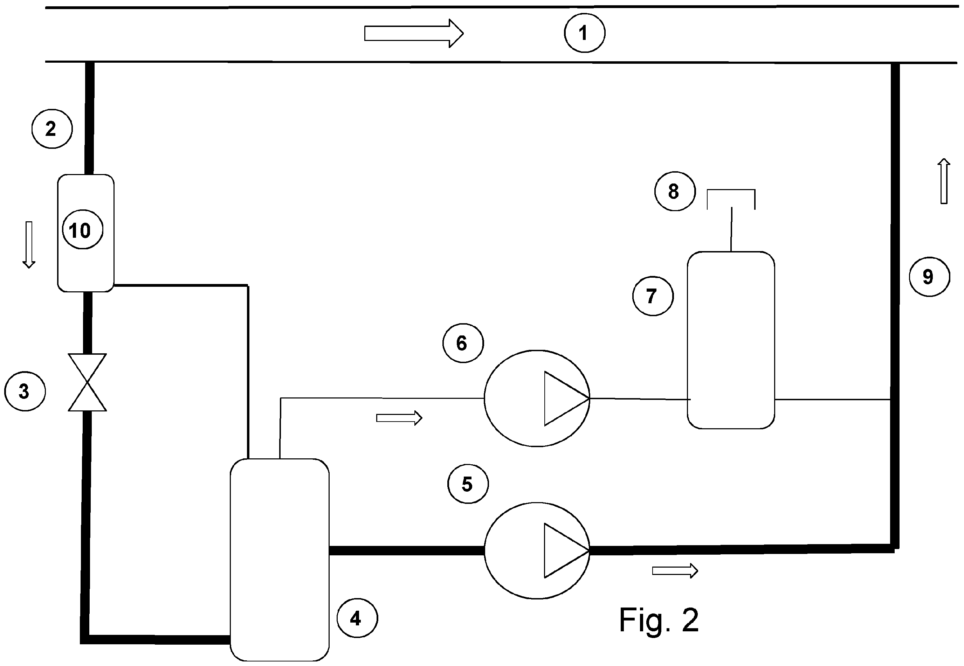

When the amounts of gas are large, the first pump 5 can lose pressure and flow as a result of cavitation and gas bubbles remaining on the pump wheels of the pump. A membrane unit 10, see Figure 2, mounted on the conduit 2, minimizes this problem. The second pump 6 is not affected, since it has a low flow and is a continuous-flow pump. The underpressure side of the membrane unit 10 is connected to the degassing tank 4. Hence, gas passes the membrane of the membrane unit and flows to the deairing tank.

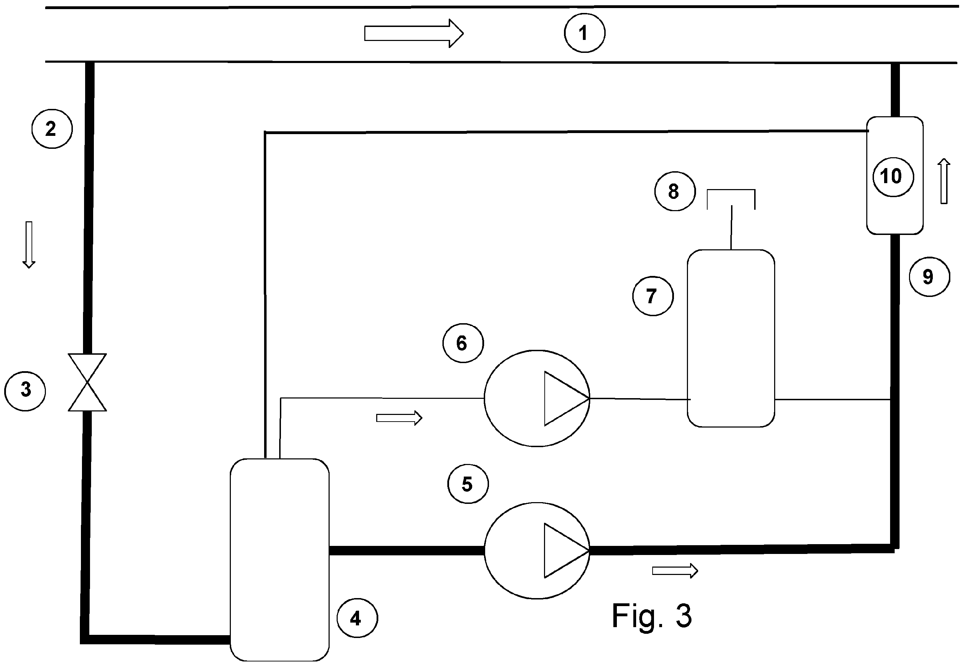

When gas volumes are small, a membrane unit 10, see Figure 3, mounted on the conduit 9, achieves that the degassing velocity increases and in that the amounts of gas become smaller in the liquid being conveyed to the system conduit 1. The underpressure side of the membrane unit 10 is connected to the degassing tank 4. Hence, gas passes the membrane of the membrane unit and flows to the degassing tank.

The membrane unit 10 is arranged to be permeable to gas but not to liquid. The membrane unit 10 can be of any known type, for instance a membrane unit provided by the company Membrana GmbH, Germany under the trade name Liqui-cel.

In Figures 2 and 3, the reference numerals 1-9 are the same as in Figure 1.

Above, a number of embodiments have been described covering certain compounds. However, the present invention is not limited to the described compounds. Moreover, the system conduit 1 from which a part of the liquid mixture is isolated can be different conduits in the system, where what is important is that all liquid in the system over time will pass.

Therefore, the present invention is not to be considered limited to the above disclosed embodiments, but can be varied within the scope of the enclosed claims.

## Claims

1. Method for degassing certain compounds in liquid mixtures with low boiling point in closed liquid systems, wherein a part of the liquid is isolated for degassing and wherein degassed liquid is restored to the closed system, where a part of the liquid mixture is diverted from the closed system (1), where a vacuum control valve (3) is caused to lower the pressure of the diverted liquid to a predetermined under-pressure, where the liquid with the lowered pressure is brought to a degassing tank (4) in which degassing of the liquid is caused to take place, and where the pressure in the degassing tank (4) is caused to be sufficiently low for certain compounds to leave the liquid in gas phase,
**characterized in that** a second pump (6) after the degassing tank (4) is caused to increase the pressure of a smaller part of the diverted liquid part and the gas to a sufficient pressure for certain compounds to dissolve in the liquid while other compounds remain in gas phase, **in that** the second pump (6) is caused to pump the liquid and the gas from the degassing tank (4) to a deairing tank (7) comprising a deairing valve (8) to the environment, through which valve separated gases flow out to the environment, and **in that** the liquid in the deairing tank (7) is caused to flow back to the closed system (1), and **in that** a remaining part of the liquid in the degassing tank (4), using a first pump (5), is caused to be pumped directly from the degassing tank (4) back to the closed system (1).

2. Method according to claim 1, **characterised**
**in that** the underpressure in the degassing tank (4) is caused to be between 0.05 bars and 0.4 bars at a system pressure of between 0.5 bars and 6 bars.

3. Method according to claim 1 or 2, **characterised in that** the pressure increase in the deairing tank (7) is caused to be minimally the prevailing system pressure.

4. Method according to claim 1, 2 or 3, **characterised in that** a membrane unit (10) is arranged on a conduit (2), using which the said part is diverted, and **in that** the underpressure side of the membrane unit (10) is connected to said degassing tank (4).

5. Method according to claim 1, 2 or 3, **characterised in that** a membrane unit (10) is arranged on a conduit (4), using which the said part is reinstituted to the closed system, and **in that** the underpressure side of the membrane unit (10) is connected to said degassing tank (4).

## Patentansprüche

1. Verfahren zum Entgasen bestimmter Komponenten in Flüssigkeitsgemischen mit niedrigem Siedepunkt in geschlossenen Flüssigkeitssystemen, wobei ein Teil der Flüssigkeit zum Entgasen isoliert wird und wobei entgaste Flüssigkeit in das geschlossene System zurückgeführt wird, wobei ein Teil des Flüssigkeitsgemischs aus dem geschlossenen System (1) abgeleitet wird, wobei ein Vakuumsteuerventil (3) dazu veranlasst wird, den Druck der abgeleiteten Flüssigkeit auf einen vorbestimmten Unterdruck zu senken, wobei die Flüssigkeit mit dem abgesenkten Druck in einen Entgasungstank (4) gebracht wird, in dem die Entgasung der Flüssigkeit erfolgt, und wobei der Druck im Entgasungstank (4) veranlasst wird, ausreichend niedrig zu sein, dass bestimmte Komponenten die Flüssigkeit in der Gasphase verlassen können,
**dadurch gekennzeichnet,**
**dass** eine zweite Pumpe (6) nach dem Entgasungstank (4) dazu veranlasst wird, den Druck eines kleineren Teils des abgeleiteten Flüssigkeitsteils und des Gases auf einen ausreichenden Druck zu erhöhen, damit sich bestimmte Komponenten in der Flüssigkeit auflösen können, während andere Komponenten in der Gasphase verbleiben,
**dass** die zweite Pumpe (6) dazu veranlasst wird, die Flüssigkeit und das Gas aus dem Entgasungstank (4) in einen Entlüftungstank (7) zu pumpen, der ein Entlüftungsventil (8) zur Umgebung umfasst, durch die ventilgesteuerte Gase in die Umgebung strömen, und
**dass** die Flüssigkeit im Entlüftungstank (7) dazu veranlasst wird, in das geschlossene System (1) zurück zu fließen, und dass ein verbleibender Teil der Flüssigkeit im Entgasungstank (4) unter Verwendung einer ersten Pumpe (5) dazu veranlasst wir, direkt aus dem Entgasungstank (4) in das geschlossene System (1) gepumpt zu werden.

2. Verfahren nach Anspruch 1, **dadurch gekennzeichnet, dass** der Unterdruck im Entgasungstank (4) bei einem Systemdruck zwischen 0,5 bar und 6 bar zwischen 0,05 bar und 0,4 bar liegt.

3. Verfahren nach Anspruch 1 oder 2, **dadurch gekennzeichnet, dass** der Druckanstieg im Entlüftungsbehälter (7) dazu veranlasst wird, mindestens dem vorherrschenden Systemdruck zu entsprechen.

4. Verfahren nach Anspruch 1, 2 oder 3, dadurch **gekenn- zeichnet**, dass eine Membraneinheit (10) auf einer Leitung (2) angeordnet ist, mit der der Teil abgeleitet wird, und dass die Unterdruckseite der Membraneinheit (10) mit dem Entgasungstank (4) verbunden ist.

5. Verfahren nach Anspruch 1, 2 oder 3, dadurch **gekenn- zeichnet**, dass eine Membraneinheit (10) auf einer Leitung (4) angeordnet ist, mit der der Teil wieder in das geschlossene System eingebracht wird, und dass die Unterdruckseite der Membraneinheit (10) mit dem Entgasungstank (4) verbunden ist.

## Revendications

1. Procédé pour dégazer certains composés dans des mélanges liquides à bas point d'ébullition dans des systèmes liquides fermés, dans lequel une partie du liquide est isolée pour être dégazée et dans lequel le liquide dégazé est ramené dans le système fermé, où une partie du mélange liquide est détournée du système fermé (1), où une vanne de commande de vide (3) est amenée à abaisser la pression du liquide détourné jusqu'à une pression réduite prédéterminée, où le liquide ayant la pression réduite est amené dans un réservoir de dégazage (4) dans lequel le dégazage du liquide est amené à avoir lieu, et où la pression dans le réservoir de dégazage (4) est amenée à être suffisamment basse pour que certains composés quittent le liquide en phase gazeuse,
**caractérisé en ce qu'**une deuxième pompe (6) après le réservoir de dégazage (4) est amenée à augmenter la pression d'une partie plus petite de la partie liquide détournée et du gaz jusqu'à une pression suffisante pour que certains composés se dissolvent dans le liquide tandis que d'autres composés restent en phase gazeuse, **en ce que** la deuxième pompe (6) est amenée à pomper le liquide et le gaz depuis le réservoir de dégazage (4) vers un réservoir de désaération (7) comprenant une vanne de désaération (8) vers l'environnement, vanne par l'intermédiaire de laquelle les gaz séparés s'écoulent vers l'environnement, et **en ce que** le liquide dans le réservoir de désaération (7) est amené à refluer vers le système fermé (1), et **en ce qu'**une partie restante du liquide dans le réservoir de dégazage (4), par utilisation d'une première pompe (5), est amenée à être renvoyée directement par pompage depuis le réservoir de dégazage (4) vers le système fermé (1).

2. Procédé selon la revendication 1, **caractérisé en ce que** la pression réduite dans le réservoir de dégazage (4) est amenée à être comprise entre 0,05 bar et 0,4 bar pour une pression du système comprise entre 0,5 bar et 6 bar.

3. Procédé selon la revendication 1 ou 2, **caractérisé en ce que** l'augmentation de pression dans le réservoir de désaération (7) est amenée à être au minimum la pression en vigueur du système.

4. Procédé selon la revendication 1, 2 ou 3, **caractérisé en ce qu'**une unité de membrane (10) est disposée sur une conduite (2), à l'aide de laquelle ladite partie est détournée, et **en ce que** le côté sous pression réduite de l'unité de membrane (10) est connecté audit réservoir de dégazage (4).

5. Procédé selon la revendication 1, 2 ou 3, **caractérisé en ce qu'**une unité de membrane (10) est disposée sur une conduite (4), à l'aide de laquelle ladite partie est réintroduite dans le système fermé, et **en ce que** le côté sous pression réduite de l'unité de membrane (10) est connecté audit réservoir de dégazage (4).
